# EUROPEAN PATENT APPLICATION

(11) **EP 3 553 677 A1**
(43) Date of publication of application: **16.10.2019**
(21) Application number: 18465514.0
(22) Date of filing: 13.04.2018
(51) Int. Cl.: G06F 17/30, H04W 4/44

(54) **VEHICLE COMPRISING A CONTROL UNIT FOR RETRIEVING DATA FROM MULTIPLE BACK-ENDS**

(71) Applicant: Continental Automotive GmbH, 30165 Hannover (DE)
(72) Inventor: Rus, Bogdan Claudiu, 307287 Mosnita Veche (RO)

(57) **Abstract**

A vehicle (100) is provided comprising a control unit (200) configured to retrieve data elements from multiple back-ends (102) . The control unit (200) further comprises a user interface (201) based on a user interface model for providing a tree representation (202, 203, 204) of data elements, a navigation virtual key logic (206) for generating virtual keys and a cache (207) for storing data elements. The navigation virtual key logic (206) is configured to generate keys based on the tree representation (202, 203, 204) of the data elements and the user interface (201) is configured to retrieve a data element from the cache (207) over a first interface (215) using the virtual key.

## Description

The invention relates to a vehicle comprising a control unit wherein the control unit provides a user-interface for representing data elements of a plurality of back-ends in a tree structure and retrieving the data elements.

The invention concerns especially the retrieval of data elements of, e.g., an infotainment or multimedia system, where the retrieval of data elements is constrained by the conditions of a vehicle environment.

Data elements in a data processing system may be organized in groups and subgroups. User interfaces may represent the data elements, the groups and subgroups in a tree structure in order to provide a clearly arranged and structured view of the data elements. The data elements may be, e.g., files on a disk that are organized in folders and subfolders. Another example of hierarchical ordered data are data bases where the data records are organized in tables and columns. Data elements may also be logically ordered in a single group, represented by a list. A list can be regarded as a sub-type of a tree also comprising nodes. The present specification applies to lists in the same way as to trees without limitation.

In a tree structure, on top of the hierarchical structure, the tree has a root node in a highest layer. The root node comprises child nodes in a second layer to which the root node is the parent node. Depending on the depth of the hierarchy, each child node may have in a further layer again child nodes so that the path represents a branch. The child nodes in the last layer of a branch, i.e. the lowest layer of a branch, are usually called leaves. Leaves may exist in any layer level, as any of the nodes does not necessarily have a further child node. In the present specification, the term "node" is used in general for all types of nodes, i.e., root node, child and parent nodes and leaves.

Lists may be seen as one-dimensional trees where the layer depth is one and where each node is a leaf. In a broader sense, lists may comprise one or more root nodes and each root node may have several leaves.

The user interface related part of the data retrieving system is called front-end, the data related part, and especially the storage of the data elements and the administration of the data elements on system-side is called back-end.

The front-end comprises the user interface, which may present the data-elements graphically to the user in form of a list or a tree. It may further comprise some logic and some kind of data buffer or storage as, e.g., a cache.

The user navigates through the tree structure, e.g., by scrolling up and down or by expanding or collapsing the nodes with a mouse, touch pen, keyboard or a button. The user may access a data element, e.g., by selecting it in a known way, e.g., clicking, or by an application as, e.g., a play list for sound files.

A typical process of accessing a data element is explained in the following. Each node of the tree is represented by an identifier. An identifier may be, e.g., a pointer, an address, a name, or a number or a combination thereof. The identifier and the data element constitute a pair. For such "key/value"-pairs there exist specialized containers where the keys correspond to identifiers. Different keys may be assigned to the same value.

When the user selects a node in the user interface the user interface recognizes that an action for the node is necessary and generates a data element request command to the back-end. The back-end processes the request and provides the data element that is related to the key to the front-end or to the application.

The term "back-end" relates to the part of the system, which is not directly accessible by the user in contrast to the front-end that comprises the user interface and the logic directly associated with the user interface. For example, a front-end may be a client as, e.g., a browser on a local PC or a panel and a back-end may be a processing unit comprising a mass storage or a server in a network.

According to an aspect, a vehicle is provided, comprising a control unit configured to retrieve data elements from multiple back-ends, a user interface based on a user interface model for providing a tree representation of data elements, a navigation virtual key logic for generating virtual keys and a cache for storing data elements, wherein the navigation virtual key logic is configured to generate virtual keys based on the tree representation of the data elements, and wherein the user interface is configured to retrieve a data element from the cache over a first interface using the virtual key.

In other words, the control unit of the vehicle provides a user interface comprising a tree and the nodes of the tree correspond to data elements that have to be retrieved from a storage in the back-end. A tree is understood to be a list in a simple case where, e.g., a root node of the tree is the only parent node in this root node domain or branch. The tree may have more than one root node. The storage may be, e.g., a memory with a file system, a database, remote devices that are accessed via a specific application programming interface (API). Multiple back-ends, which may differ in type, may be connected to the front-end and the data elements may be retrieved from these back-ends. Each back-end type may be represented by a corresponding root node and the data elements of a back-end may be represented by the nodes, in particular the leaves in the corresponding root node domain.

The data elements may be not directly accessed by the user interface but via a cache that is functionally located between the user interface and the back-end. The cache contains the data elements and is accessed by the user interface using a virtual key.

The user interface may be based on a model whose implementation may vary dependent on the present technical stack as, e.g., the operating system, programming language, etc. When retrieving data for a node is required, the navigation virtual key logic generates a virtual key for a node of the tree.

A virtual key may comprise, e.g., an ordered concatenation of the node sequence following from the root over all child nodes to a leave. The virtual key may also comprise further information, as e.g. the type of data, the type or an identifier of the back-end, or, e.g., special characters, contextual information as, e.g., validity time of a track, metadata as, e.g. the date when a voice note was recorded, chunking information as, e.g., the begin and the end of a track in a compilation, and likewise, chapters in podcasts, etc.

The navigation virtual key logic inserts the key into a command for requesting the data element, which is associated with the node and which is identified by the virtual key. Due to the virtual nature of the keys, they do not necessarily represent a physical path or location of a data element but a logical path and data elements of the different back-ends and are generated in the same way according to a suitable scheme, independent of the back-end and back-end type. Each key may comprise further information that cannot be encoded as path as described above. This information may be prepended to the actual path information. Furthermore, virtual keys may comprise operations as explained further below. The virtual keys may further be compressed, depending on the number of elements and depth of hierarchy, or may be converted to hash keys, etc.

The key may have a fixed size or a dynamic size. For memory efficiency and data locality the size of the key or the metadata required to derive it, is embedded in the key.

The term navigation is related to the navigation through the tree, either by the user or by the logic, determining or following, e.g., the current path.

The configuration of the control unit may be accomplished by a software component, a program element or a computer program.

According to an embodiment, the cache is further configured to retrieve data elements related to the tree representation of the data elements from a back-end storage over a second interface using the virtual keys. The second interface may be the interface or the API between the back-end and the front-end. More sophisticated, the cache logic in the front-end accesses the second interface to send a command to the back-end to retrieve data elements from one of the storages of the connected back-ends. Hereby, the command comprises a virtual key.

According to an embodiment, the cache comprises pages and the cache is configured to store a data element in at least one page. Typically, a cache consists of a plurality of small storage units that are also called page, memory page, or virtual page. A page contains one or more elements, however a single element can be present in multiple pages because each page has a specific virtual key, and if an element is accessible by navigating through two different paths, it can be therefore in two different pages, e.g., usb0:/artist1/album11/track111 or usb0:/album11/track111.

The eviction of the cache may be performed according to, e.g., cache eviction strategies as, e.g., Least Recently Used (LRU), LRU per tree layer instead of per page or other LRU derivatives based on application specific constraints.

According to an embodiment, the cache is a read through cache. When an application, e.g., the user interface, asks the cache for an entry, and the entry is not already in the cache, the cache logic loads the data element from the data source, e.g. the database in the back-end. If the data element exists in the data source, the cache logic will place it in the cache for future use. The cache may be refreshed ahead, e.g., by a prefetcher, for further improving the read performance.

According to an embodiment, the user interface is implemented according to a user interface model selected from a plurality of different user interface models wherein a programming interface to the navigation virtual key logic does not depend on the selection of the user interface model. That is, the user interface may be implemented in different ways dependent on, e.g. the technical stack. In contrast, the programming interface between the user interface and the navigation virtual key logic may be independent on the technical stack, so that the implementation for the navigation virtual key logic may be the same for any technical stack and may be re-used in other technical stack environments. In this way, the navigation virtual key logic may be implemented only once and can be re-used in other environments .

According to an embodiment the virtual keys provide the following operations to modify or copy the virtual key: "go to root", to relate the virtual key to the root node, "go to parent", to relate the virtual key to the parent node, "go to nth child", to relate the virtual key to the parent node, "activate child actions", to relate the virtual key to an execution of a child node action, and "get list of operations" to obtain a list of operations for navigating from one key to another. The operations allow a simple mechanism to navigate through the tree or list and to relate the corresponding nodes to which is moved to immediately to the virtual key. These operations either mutate the key itself or provide an immutable copy. Child actions may comprise, e.g., entering a folder, loading an album, playing a track or anything else for the specific context. Further optimizations can be performed using, e.g., a "Copy on Write" pattern where in general, e.g., for a resource that is duplicated but not modified no new resource is created but the resource is shared between the copy and the original.

According to an embodiment, the back-ends each are implemented according to a corresponding back-end model selected from a plurality of back-end models, and wherein a programming interface from the back-ends to the front-end does not depend on the selection of the respective back-end model.

This means that there are the back-ends that comprise data storages as, e.g., file systems, databases, etc. or external sources that can be accessed via a further programming interface (application programming interface, API). The back-end has furthermore some logic to administrate, maintain, modify, organize and access its data in form of data elements. As there may be different back-end types requiring specific implementations for the back-end, a common interface may be defined avoiding different implementations on front-end side. Using a common interface that does not dependent on the back-end type and implementation allows thus for a unique implementation of the front-end between this programming interface and the programming interface from the navigation virtual key logic to the user-interface. This unique implementation thus comprises especially the virtual navigation key logic and the cache, inclusively the cache logic.

The back-ends may be located inside the car or outside the car. Therefore, the physical connection between the front-end and the back-ends may be, e.g., a wired connection according to, e.g., the Ethernet Protocol or any other suitable type of communication protocol known by a person skilled in the art. E.g., the connection may be based on a Wireless Local Area Network (WLAN) communication, or on any mobile communication standard as, e.g., GSM, LTE, UMTS, IOT, or further communication protocols, especially those which are capable to carry traffic according to the Internet Protocol.

According to an embodiment the tree represents data elements of different back-end models and the user interface retrieves the data elements from different back-end models using the virtual keys. The generation of the virtual keys does not depend on the back-end type so that they can be used for retrieving data elements of any back-end type.

According to an embodiment, the front-end additionally comprises a prefetcher, wherein the prefetcher is configured to send a data request command to the back-end, and the data request command comprises the virtual key; wherein the prefetcher is configured to obtain requested data elements according to the virtual key; and wherein the prefetcher is configured to provide the data elements to the cache for storing them in the corresponding pages of the cache.

According to an embodiment, the prefetcher is configured to retrieve one or more data elements from the back-end storage upon a cache request or upon a user interface request.

The cache on the data retrieval side is filled by a prefetcher that requests the data from the back-end and fills the cache pages in advance. The prefetcher will queue a further set of requests. Requests may comprise one or many pages or elements, depending, e.g., on the scrolling order, where the direction of list scrolling is inferred from the cache request order or from specific model requests. Requests may also comprise a complete set of elements on the layer.

The prefetcher uses the same virtual key as the navigation virtual key logic.

According to an embodiment, the back-end comprises back-end virtual keys, wherein the back-end maintains separate back-end virtual keys, wherein the back-end virtual keys are synchronized to the back-end data elements by the back-end and the back-end synchronizes the back-end virtual keys with the navigation virtual keys.

In case of stateful navigation, e.g., if the data provider can only be in one node at a single time, and where node changes are particularly expensive, due to cached data, the back-end navigation can be located in a completely different node compared to the shown list. For such data providers, another virtual key is maintained by the back-end, e.g., one per navigation node. The virtual key and the stateful node data are kept in sync by the back-end. Whenever the back-end key is different from the navigation key for the requested node from front-end, the back-end will request the virtual keys to resynchronize and provide a list of operations to be executed on data provider's node to resynchronize its data. One possible algorithm is to determine the common parts of the paths and provide the minimum list of "go to child", "go to parent", "go to root" operations to resynchronize. Potential optimizations are, e.g., when go to root operation is available in the back-end: if depth(key1) + depth (key2) - 2 * commonDepth > commonDepth, pick the go_to_root route instead of the common path one.

According to an embodiment, the nodes in the tree represent different back-end models. With virtual keys, any node is identified by a virtual key in the same way, independent on the type or the implementation of the back-end. The pages in the cache then contain the data elements of different back-end types. As the virtual key may also comprise an identifier for a connected back-end model the data element is associated with, the back-end model can determine whether it is responsible for the data element or not. Receiving a corresponding reply, the cache or the prefetcher gets the data element from that back-end that is responsible for the data element.

According to an aspect, a software component is provided that is configured to retrieve data elements from multiple back-ends, comprising: a user interface based on a user interface model for providing a tree representation of data elements; a navigation virtual key logic for generating virtual keys and a cache for storing data elements, wherein the navigation virtual key logic is configured to generate keys based on the tree representation of the data elements; and wherein the user interface is configured to retrieve a data element from the cache over a first interface using the virtual key.

According to an aspect, a method for retrieving data in a user interface tree is provided, comprising: providing a tree representation of data elements, generating a virtual key based on the tree representation of a data element, and retrieving a data element from a cache over a first interface using the virtual key.

According to an embodiment, the method further comprises sending a data request command by a prefetcher to a back-end over a second interface, the request command comprising the virtual key, obtaining the requested data element according to the virtual key; and storing the obtained data element in the cache.

The invention leads to memory usage reduction, memory usage control, better performance for hard to cache devices by introducing optimized navigation for embedded devices that keep their own state, and to an easier and faster development. In more detail, a faster and cheaper backend integration is possible because the caching and the front-end are reused. The unified caching provides better memory usage, i.e. less memory is needed, as a single LRU cache covers all devices in a multiple device integration. More memory control is available as the virtual key paths are small and lightweight and deterministic in memory consumption opposed to full file system paths. Memory efficiency is further enhanced because multiple keys can point to the same data. E.g., metadata is tracked when the track is referenced from multiple navigation paths, e.g., all albums, album names, and track names. A faster and easier user interface development is possible as all source types have the same interface. The root of the key can be immediately used as device. A better and faster memory efficiency in terms of Central Processor Unit (CPU) cycles delivery of data is achieved by adding a single cache close to the user interface instead of a per data source cache.

The following figures illustrate embodiments of the invention.
- Fig. 1: shows a vehicle according to an embodiment.
- Fig. 2: shows a control unit according to an embodiment.
- Fig. 3: shows a method according to an embodiment.

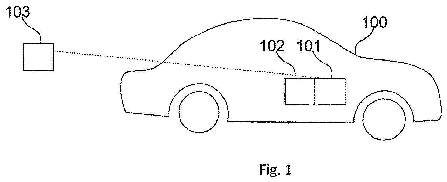

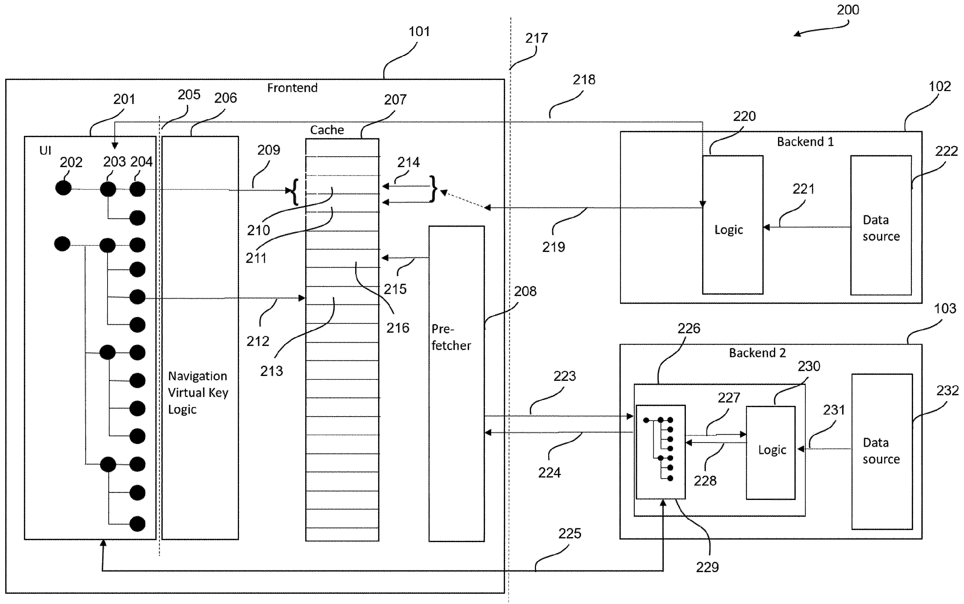

Fig. 1 shows a vehicle 100 with a control unit 200 comprising a front-end 101 and a back-end 102 that is in this example located inside the car 100 and a back-end 103 that is in this example located outside the car. The back-end 102 inside the car is connected to the front-end in this example by wire whereas the back-end 103 is connected wireless with the front-end. The front-end and the back-ends are parts of the software component 200 which is illustrated by means of Fig. 2.

Fig. 2 shows an example of the control unit 200 in a vehicle 100 according to an embodiment. The control unit 200 in this example comprises a front-end 101, a first back-end 102 and a second back-end 103. Furthermore the control unit 200 comprises a user interface 103 based on a user interface model for providing a tree representation (202, 203, 204) of data elements. The control unit 200 comprises further a navigation virtual key logic 206 for generating virtual keys and a cache 207 including cache logic for storing data elements, wherein the navigation virtual key logic 206 is configured to generate keys based on the tree representation 202, 203, 204 of the data elements; and wherein the user interface 201 is configured to retrieve a data element 210 from the cache 207 over a first interface 205 using the virtual key. The cache 207 may consist of smaller storage units, i.e., pages 210, 211, 213, 216 to store data elements. Dependent on the number of nodes referring to a data element, a data element may be stored in more than one page, e.g. in pages 210 and 211.

The data request 209 from the user interface 201 is sent over the interface 205 comprising, e.g., a common programming interface to the navigation virtual key logic, that generates a virtual key and inserts the key into the data element request 209. The request then is passed to the cache 207, which is also a part of the front-end 101.

In an example, the cache 207 may determine upon a data request 209 whether the requested data element is available in its pages 210, 211, 216, 213. If not, the cache may send a data element request 218 to a back-end 202 using the virtual key generated by the navigation virtual logic 206. The data request 218 is sent over an interface 217 with a common programming interface to the back-end 202. The back-end 202 determines by its logic 220 the data element to be retrieved, and the data element is provided 221 by source 222 to the logic 220 and is further provided 219 via interface 217 to the cache 207. In this example, the data element is stored 214 in the pages 210 and 211. Now, the user interface can access the cache pages 210, 211 to retrieve the data element. The data element may also be, e.g., first provided to the user-interface and then stored in the cache 207.

The front-end 102 may further comprise a prefetcher 208 that retrieves data elements from the back-ends 102, 103 in advance and stores them in the cache 207, which may be a read through cache. E.g., the prefetcher 208 may send a data element request 223 to the back-end 103 via interface 217 using also the virtual keys. Back-end 103 may have its own tree structure 229, administrated by the back-end itself. The tree structure 229 is identical with and synchronized to the tree structure of the user interface 201. The back-end logic 230 receives 227 the data element request, and retrieves it 231 from the data source 232. The data element is passed 228 to the tree structure 229 and further to the prefetcher 208 that stores 215 it in the cache page 215. The user interface then may access 212 the data element that was stored in advance in a page 213 and that is requested by the user interface 201.

As described above, due to the use of virtual keys the programming interfaces of the interfaces 205 and 217 may be the same for each user-interface implementation and back-end type, respectively. That is, there may be a unique software implementation of the part between the interface 205 and the interface 217 whereas the software implementation for the user interface may be implemented dependent on, e.g., the technical stack, and the back-ends may differ, e.g., dependent on their type. Furthermore, back-ends 102, 103 of different type may be connected to the front-end 101 at the same time and data elements of different back-end types that are represented by the nodes 202, 203, 204 of the tree of list of the user interface 201 may be retrieved.

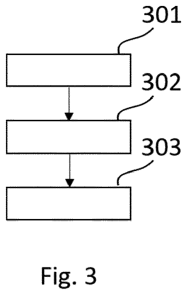

Fig. 3 shows a method according to an embodiment. The method comprises: providing a tree representation of data elements 301, generating a virtual key based on the tree representation of a data element 302, and retrieving a data element from a cache over a first interface using the virtual key 303.

## Claims

1. Vehicle (100), comprising:
a control unit (200) configured to retrieve data elements from multiple back-ends (103, 103);
a user interface (201) based on a user interface model for providing a tree representation (202, 203, 204) of data elements;
- a navigation virtual key logic (206) for generating virtual keys and a cache (207) for storing data elements, wherein the navigation virtual key logic (206) is configured to generate keys based on the tree representation (202, 203, 204) of the data elements; and wherein
- the user interface (201) is configured to retrieve a data element from the cache (207) over a first interface (205) using the virtual key.

2. Vehicle (100) according to claim 1, wherein
the cache (207) is further configured to retrieve data elements related to the tree representation (202, 203, 204) of the data elements from a back-end storage (222, 223) over a second interface (217) using the virtual keys.

3. Vehicle (100) according to claim 1 or 2, wherein the cache (207) comprises pages (210, 211, 213, 216) and the cache (207) is configured to store a data element in at least one page (210, 211, 213, 216).

4. Vehicle according to one of the previous claims, wherein the cache (207) is a read through cache.

5. Vehicle (100) according to one of the previous claims, wherein the user interface (201) is implemented according to a user interface model selected from a plurality of different user interface models wherein a programming interface to the navigation virtual key logic does not depend on the selection of the user interface model.

6. Vehicle (100) according to one of the previous claims, wherein the virtual keys provide the following operations to modify or copy the virtual key:
- go to root, to relate the virtual key to the root node (202),
- go to parent, to relate the virtual key to a parent node (202, 203),
- go to nth child, to relate the virtual key to an nth child node (203, 204),
- activate child actions, to relate the virtual key to an execution of a child node action,
- get list of operations to obtain a list of operations for navigating from one key to another.

7. Vehicle (100) according to one of the previous claims, wherein the back-ends (102, 103) each are implemented according to a corresponding back-end model selected from a plurality of back-end models, and wherein a programming interface from the back-ends (102, 103) to the front-end (101) does not depend on the selection of the respective back-end model.

8. Vehicle (100) according to one of the previous claims, wherein the tree represents data elements of different back-end and the user interface retrieves the data elements from different back-end using the virtual keys.

9. Vehicle (100) according to one of the previous claims, wherein the front-end (101) additionally comprises a prefetcher (208), wherein
- the prefetcher (208) is configured to send a data request command to the back-end (222, 232),
- the data request command comprises the virtual key,
- the prefetcher (208) is configured to obtain requested data elements correspondent to the virtual key; and
- the prefetcher (208) is configured to store the data elements in the cache (207).

10. Vehicle (100) according to claim 8, wherein the prefetcher (208) is configured to retrieve one or more data elements from the back-end storage (222, 232) upon a cache request or upon a user interface model request.

11. Vehicle (100) according to one of the previous claims, wherein the back-end (102, 103) comprises back-end virtual keys, wherein
- the back-end (102, 103) maintains separate back-end virtual keys;
- the back-end virtual keys are synchronized to the back-end data elements by the back-end; and wherein
- the back-end synchronizes the back-end virtual keys with the navigation virtual keys.

12. Software component, configured to retrieve data elements from multiple back-ends (102, 103), comprising:
a user interface (201) based on a user interface model for providing a tree representation (202, 203, 204) of data elements;
a navigation virtual key logic (206) for generating virtual keys and a cache (207) for storing data elements, wherein
- the navigation virtual key logic is configured to generate keys based on the tree representation (202, 203, 204) of the data elements; and wherein
- the user interface (201) is configured to retrieve a data element from the cache (207) over a first interface (205) using the virtual key.

13. Method for retrieving data in a user interface tree, comprising:
- providing (301) a tree representation of data elements,
- generating (302) a virtual key based on the tree representation of a data element, and
- retrieving (303) a data element from a cache over a first interface using the virtual key.

14. Method according to claim 13, wherein retrieving (303) a data element from a cache over a first interface using the virtual key further comprises:
- sending a data request command by a prefetcher to a back-end over a second interface, the request command comprising the virtual key,
- obtaining the requested data element correspondent to the virtual key; and
- storing the obtained data element in the cache (207).
